Europäisches Patentamt

European Patent Office

Office européen des brevets

(11) Veröffentlichungsnummer: **0 069 401**
**B1**

(12) **EUROPÄISCHE PATENTSCHRIFT**

(45) Veröffentlichungstag der Patentschrift: **15.01.86**

(51) Int. Cl.⁴: **B 21 D 47/00**

(21) Anmeldenummer: **82106129.8**

(22) Anmeldetag: **08.07.82**

(54) **Verfahren zur Herstellung eines flächigen Verbundmaterials.**

(30) Priorität: **08.07.81 DE 3126948**
**21.04.82 DE 3214821**

(43) Veröffentlichungstag der Anmeldung:
**12.01.83 Patentblatt 83/02**

(45) Bekanntmachung des Hinweises auf die
Patenterteilung:
**15.01.86 Patentblatt 86/03**

(84) Benannte Vertragsstaaten:
**AT BE CH DE FR GB IT LI NL SE**

(56) Entgegenhaltungen:
**CH-A- 319 959**
**DE-A-1 461 211**
**DE-A-1 915 129**
**DE-A-2 914 062**
**DE-B-2 820 413**
**DE-C- 460 820**
**FR-A-1 594 303**
**GB-A- 865 833**
**GB-A-1 221 134**
**US-A-3 489 387**
**US-A-3 507 634**
**US-A-4 251 598**
**US-A-4 253 903**

(73) Patentinhaber: **Schertler, Manfred Klaus**
**Eulatalstrasse 31**
**D-8858 Neuburg (DE)**

(72) Erfinder: **Schertler, Manfred Klaus**
**Eulatalstrasse 31**
**D-8858 Neuburg (DE)**

(74) Vertreter: **Patentanwälte Schaumburg &
Thoenes**
**Mauerkircherstrasse 31 Postfach 86 07 48**
**D-8000 München 86 (DE)**

Liber, Stockholm 1985

2

## Beschreibung

Die Erfindung betrifft ein Verfahren zur kontinuierlichen Herstellung eines flächigen Verbundmaterials, das aus mindestens einer stetig gewellten Blechbahn und mindestens einer planen Blechbahn besteht, wobei von einer ersten Vorratsspule eine Blechbahn abgezogen und zwischen zwei ineinandergreifenden Profilwalzen quer zur Bahnlängsrichtung gewellt wird und wobei mindestens eine von einer zweiten Vorratsspule abgezogene plane Blechbahn mit der gewellten Blechbahn kontinuierlich zusammengeführt und durch einen Heißschmelzkleber längs der Wellenkämme der gewellten Blechbahn mit dieser verbunden wird worauf das Verbundmaterial gekühlt wird.

Ein Verfahren der vorstehend genannten Art ist beispielsweise aus der GB–A–1 570 734 zum Herstellen von Wärmetauschern oder dergleichen bekannt. Bei dem dort beschriebenen Verfahren soll durch den unmittelbar vor dem Zusammenführen der beiden Blechbahnen aufgetragenen Schmelzkleber nur eine sofortige vorläufige Haftung der beiden Blechbahnen aneinander erreicht werden, während die eigentliche belastbare Klebeverbindung zwischen den beiden Blechbahnen durch einen langsam abbindenden Klebstoff erzielt wird. Der auf die Blechbahnen aufgetragene Schmelzkleber ist für eine belastbare Klebeverbindung nicht geeignet da er beim Auftragen auf die kalten Blechbahnen abgeschreckt wird und somit keine innige Verbindung mit der jeweiligen Blechoberfläche eingeht. Das bekannte Verfahren hat somit den Nachteil, daß einerseits zwei unterschiedliche Klebstoffe aufgetragen werden müssen, wozu auch entsprechende apparative Maßnahmen zu treffen sind, und daß andererseits die lange Aushärte- oder Abbindezeit des Klebstoffes, der für die belastbare und dauerhafte Klebeverbindung verwendet werden muß, ein kontinuierliches Herstellungsverfahren unwirtschaftlich ist. Das Material kann in diesem Falle nach dem Verkleben nicht sofort weiterverarbeitet, zugeschnitten oder verpackt werden, sondern muß zum Abbinden des Klebstoffes gelagert werden. Hierzu sind nicht nur zusätzliche Arbeitsgänge sondern auch ein entsprechender Lagerraum erforderlich.

Der Erfindung liegt die Aufgabe zugrunde, ein Verfahren der eingangs genannten Art anzugeben, das es erlaubt, ein sofort belastbares plattenförmiges Verbundmaterial der genannten Art kontinuierlich in wirtschaftlicher Weise herzustellen.

Diese Aufgabe wird erfindungsgemäß dadurch gelöst, daß die gewellte Blechbahn mittels beheizter Profilwalzen profiliert wird und vor dem und während des Durchlaufs durch die Profilwalzen soweit erwärmt wird, daß der Klebstoff nicht unmittelbar beim Auftrag auf die Blechbahn erhärtet, daß der vorgeschmolzene Klebstoff auf die Wellenkämme der gewellten Blechbahn in Form einer sich entlang der Wellenkämme erstreckenden schmalen Klebstofflinie aufgetragen wird, daß die plane Blechbahn vorgeheizt und gegen die mit Klebstoff versehene gewellte Blechbahn angedrückt wird, daß das aus der gewellten Blechbahn und der planen Blechbahn bestehende Verbundmaterial kontinuierlich über eine ebene Unterlage geführt wird, daß nach dem Auftrag von Klebstoff auf die freien Wellenkämme der gewellten Blechbahn eine zweite vorgeheizte Blechbahn kontinuierlich zugeführt und gegen das Verbundmaterial angepreßt wird und daß das aus den drei Blechbahnen bestehende Verbundmaterial abgekühlt und zerteilt wird.

Überraschenderweise hat sich gezeigt, daß sich mit dem erfindungsgemäßen Verfahren ein plattenförmiges Verbundmaterial hoher Festigkeit kontinuierlich auf wirtschaftliche Weise herstellen läßt. Der vorgeschlagene Auftrag des geschmolzenen Klebstoffes nur in schmalen Klebstofflinien führt zu einer Klebstoffersparnis und dennoch zu guter Verbindung der einzelnen Bahnen miteinander. Das entstehende Verbundmaterial besitzt eine Festigkeit, die mit Blechen relativ großer Stärke vergleichbar ist. Dabei brauchen die zur Herstellung des erfindungsgemäßen Materials verwendeten Bleche nur eine relativ geringe Stärke zu besitzen so daß das resultierende Verbundmaterial gegenüber massiven Blechen bei gleicher Festigkeit gegenüber mechanischen Beanspruchungen einen wesentlich geringeren Materialeinsatz erfordert und daher auch ein wesentlich geringeres Gewicht als ein massives Blech gleicher Größe und Festigkeit besitzt.

Vor dem Auftrag des Klebstoffes auf die miteinander zu verklebenden Blechbahnen können die Oberflächen der Blechbahnen beispielsweise mittels einer Gasflamme abgebrannt werden, um Rückstände des Walzöles zu entfernen. Anschließend werden die Blechbahnen mittels rotierender Metallbürsten abgebürstet, um die Oberflächen der Bahnen von Verbrennungsrückständen zu befreien und die zu verklebenden Oberflächen aufzurauhen und dadurch eine bessere Haftung des Klebers zu erreichen.

Vorzugsweise werden die Blechbahnen durch einen Polyamidklebstoff miteinander verbunden der bei geringem Materialeinsatz eine sehr haltbare Verbindung zwischen den Blechbahnen bewirkt.

Das Aufbringen des Klebstoffes kann derart erfolgen, daß der vorgeschmolzene Klebstoff mittels einer Breitschlitzdüse in Form eines Filmes auf gegenläufig angetriebene beheizte Klebstoffwalzen aufgetragen wird, von denen eine mit der gewellten Blechbahn in Berührung gebracht wird. Die Klebstoffwalzen werden dabei je nach Art des verwendeten Schmelzklebers auf ca. 180° bis 260° aufgeheizt. Die Wellenkämme der gewellten Blechbahn nehmen von dem geschlossenen Film auf der Klebstoffwalze nur etwa 20 % des Klebstoffes ab. Der entnommene Klebstoff wird mittels der Breitschlitzdüse ständig ergänzt, wobei die Zufuhr durch die Breitschlitzdüse so

2

gesteuert wird, daß jeweils nur die abgenommene Klebstoffmenge ergänzt wird, um ein Verkohlen der Heißschmelzmasse auf den Klebstoffwalzen zu verhindern.

Um sicherzustellen, daß ein gleichmäßig dünner Klebstoffauftrag nur auf den Wellenkämmen der gewellten Blechbahn erfolgt wird die Klebstoffwalze jeweils mit einem an einer Profilwalze anliegenden Abschnitt der gewellten Blechbahn in Berührung gebracht. Dadurch wird die gewellte Blechbahn in einer definierten Lage zur Klebstoffwalze gehalten. Das Anpressen und das Abkühlen der vorgeheizten ersten planen Blechbahn erfolgt ebenfalls vorzugsweise an einem Abschnitt der gewellten Blechbahn, der noch auf einer der Profilwalzen aufliegt. Zum einen wird dadurch ein Widerlager für das Anpressen der planen Blechbahn an die gewellte Blechbahn geschaffen, so daß auch bei einem hohen Anpreßdruck die gewellte Blechbahn nicht ausweichen oder sich verformen kann. Zum anderen wird durch das vorzugsweise schockartige Abkühlen der glatten Blechbahn vor dem Lösen der gewellten Blechbahn von der Profil- oder Riffelwalze sichergestellt, daß der Schmelzkleber bereits so weit erstarrt ist, daß eine sichere Haftung zwischen den beiden Blechbahnen vorhanden ist, die verhindert, daß die beiden Blechbahnen beim Abziehen der gewellten Blechbahn von der Profilwalze sich gegeneinander verschieben können.

Die Abkühlung der planen Blechbahn erfolgt vorzugsweise mittels einer an der freien Oberfläche der planen Blechbahn abrollenden gekühlten Kontaktwalze. Durch die isolierenden Luftpolster in den von den Blechwellen eingeschlossenen Kanälen und die geringe Wärmeleitung in der gewellten Blechbahn selber bleibt die Temperatur der gewellten Blechbahn im Bereich ihrer freien Wellenkämme genügend hoch, so daß sie auch auf dieser Seite mit der zweiten planen Blechbahn unter Verwendung eines Schmelzklebers verbunden werden kann. Das Abkühlen des fertigen Verbundmaterials kann dann so erfolgen, daß auf einer Seite der resultierenden Materialbahn Luft aus den von der gewellten Blechbahn gebildeten Kanälen herausgesaugt und auf der anderen Seite Kühlluft eingeblasen wird. Das resultierende Verbundmaterial kann dann in Platten zerteilt und gestapelt werden.

Ein geringer Verbrauch des hochwertigen und daher auch relativ teuren Polyamidklebstoffes läßt sich dadurch erreichen, daß der Polyamidklebstoff nahe der Stelle, an der zwei miteinander zu verbindende Blechbahnen zusammengeführt werden, extrudiert und von den Wellenkämmen der wellenförmig profilierten Blechbahn von einer entlang der Extruderöffnung verlaufenden Lippe abgestreift wird. Die Extrusionsgeschwindigkeit ist dabei so eingestellt daß jedesmal, wenn ein Wellenkamm an der Lippe der Extruderöffnung vorbeigeführt wird gerade die Klebstoffmenge bereitsteht, die für das Verkleben der Materialbahnen entlang eines Wellenkammes benötigt wird.

Die folgende Beschreibung erläutert die Erfindung in Verbindung mit den beigefügten Zeichnungen anhand von Ausführungsbeispielen. Es zeigen:

Fig. 1 eine schematische Seitenansicht einer Vorrichtung zur Herstellung eines Verbundmaterials durch Verkleben einer gewellten Blechbahn und einer planen Blechbahn,

Fig. 2 eine der Fig. 1 entsprechende Darstellung zur Erläuterung des Verklebens mittels eines extrudierten Polyamidklebstoffes und

Fig. 3 eine perspektivische Darstellung eines Verbundmaterialabschnittes unter Verwendung zweier gewellter Materialbahnen.

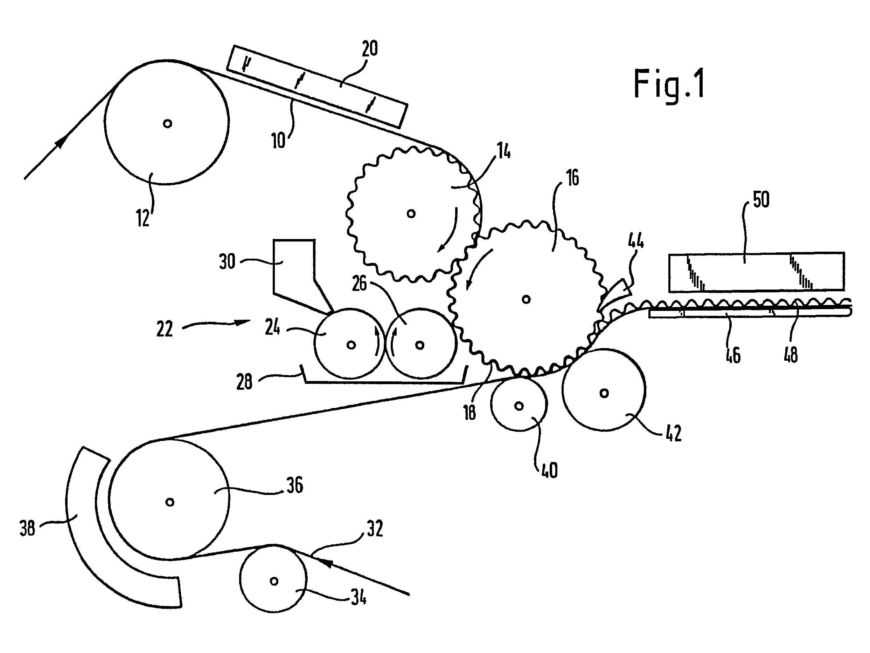

Bei der in der Fig. 1 dargestellten Vorrichtung wird von einer nicht dargestellten Vorratsrolle eine erste Blechbahn 10 über eine Umlenkrolle 12 abgezogen und in den Walzenspalt zwischen zwei Profilwalzen 14 und 15 eingeführt, die ein wellenförmiges Profil mit achsparallelen stetigen Wellen aufweisen und zahnradartig ineinandergreifen. Beim Durchlauf durch den Walzenspalt erhält die Blechbahn 10 ein entsprechendes Wellenprofil mit quer zur Bandlängsrichtung verlaufenden Wellenkämmen 18.

Die Profilwalzen oder Riffelwalzen 14 und 16 sind ebenso wie gegebenenfalls die Umlenkwalze 12 beheizbar. Zusätzlich dazu ist in Transportrichtung vor der Profilwalze 14 eine Heizvorrichtung 20 vorgesehen, um die Blechbahn 10 durch Heißluft oder Infrarotstrahlung aufzuheizen.

Mittels einer allgemein mit 22 bezeichneten Klebstoffauftragvorrichtung wird auf die Wellenkämme der noch an der Profilwalze 16 anliegenden profilierten Blechbahn 10 eine Heißschmelzmasse aufgetragen. Die Klebstoffauftragvorrichtung umfaßt zwei beheizte Klebstoffwalzen 24 und 26, die oberhalb einer Klebstoffauffangwanne 28 gegenläufig rotieren. Auf die Klebstoffwalze 24 wird mittels einer Breitspaltdüse 30 die vorgeschmolzene Heißklebemasse in einem dünnen Film aufgetragen. Von der Klebstoffwalze 24 wird die Heißschmelzmasse auf die Klebstoffwalze 26 übertragen, auf der ein dünner Klebstofffilm gebildet wird. Die mit der Klebstoffwalze 26 tangential in Berührung kommenden Wellenkämme 18 des profilierten Metallbandes nehmen von dem Klebstofffilm ca. 20 % ab, wobei eine schmale Klebstofflinie an den Wellenkämmen entsteht. Der verbrauchte Klebstoff wird durch die Breitschlitzdüse 30 ergänzt. Dabei wird durch eine entsprechende Steuerung dafür gesorgt, daß immer nur soviel Klebstoff nachfließt, wie tatsächlich verbraucht wird, um das Ansammeln und das Verkohlen von Klebstoff an den beheizten Klebstoffwalzen 24 und 26 zu vermeiden.

Von einer ebenfalls nicht dargestellten Vorratsrolle wird ferner eine zweite Blechbahn 32 über Umlenkwalzen 34 und 36 abgezogen. Die Umlenkwalzen 34 und 36 können ebenfalls beheizt sein. Alternativ oder zusätzlich dazu ist koaxial zur Umlenkwalze 36 eine Heizvorrichtung 38 vorgesehen, um die Blechbahn 32 aufzuheizen. Die Blechbahn 32 wird von der Umlenkrolle 36 kommend mittels einer Andruckwalze 40 gegen die noch an der Profilwalze 16 anliegende gewellte Blechbahn 10 angedrückt. In Transportrichtung hinter der Andruckwalze 40 befindet sich eine Kühlwalze 42, welche mit der glatten Blechbahn 32 auf deren Außenseite in Berührung tritt und die glatte Blechbahn 32 schockartig abkühlt, so daß die Heißschmelzmasse an den Klebestellen zwischen der glatten Blechbahn 32 und den Wellenkämmen der gewellten Blechbahn 10 soweit erstarrt, daß die beiden miteinander verbundenen Blechbahnen 10 und 32 ausreichend fest aneinander haften. Die miteinander verbundenen Blechbahnen können nun mittels schematisch dargestellter Finger 44 aus dem Profil der Profilwalze 16 herausgehoben und auf einen Tisch oder eine sonstige ebene Unterlage 46 gezogen werden. Hier wird die entstandene Verbundmaterialbahn 48 mittels einer Kühlvorrichtung 50 vollständig abgekühlt, wobei die abgeführte Wärme beispielsweise mittels einer Wärmepumpe wiederum zum Aufheizen der Blechbahnen 10 und 32 verwendet werden kann.

Die entstandene Verbundmaterialbahn 48 kann um eine quer zu ihrer Längsrichtung verlaufende Achse gebogen und somit auf eine Rolle aufgewickelt werden. Soll aber ein Verbundmaterial geschaffen werden, bei dem die gewellte Blechbahn auf beiden Seiten mit einer glatten ebenen Blechbahn beschichtet ist, so entfällt die Kühlvorrichtung 50. Stattdessen ist an dieser Stelle eine weitere Klebstoffauftragvorrichtung 22 angeordnet, um Klebstoff auf die dann noch warme gewellte Blechbahn aufzutragen. Ferner wird dann eine dritte Blechbahn zugeführt und mittels einer nicht dargestellten Andruckwalze gegen das auf dem Tisch 46 vorgeschobene Verbundmaterial 48 angedrückt. Die Kühlung des entstandenen dreischichtigen Verbundmaterials erfolgt dann dadurch, daß Kühlluft durch die Hohlräume oder Kanäle innerhalb des Verbundmaterials geblasen wird. Auch hier kann die abgeführte Wärme wieder genutzt werden.

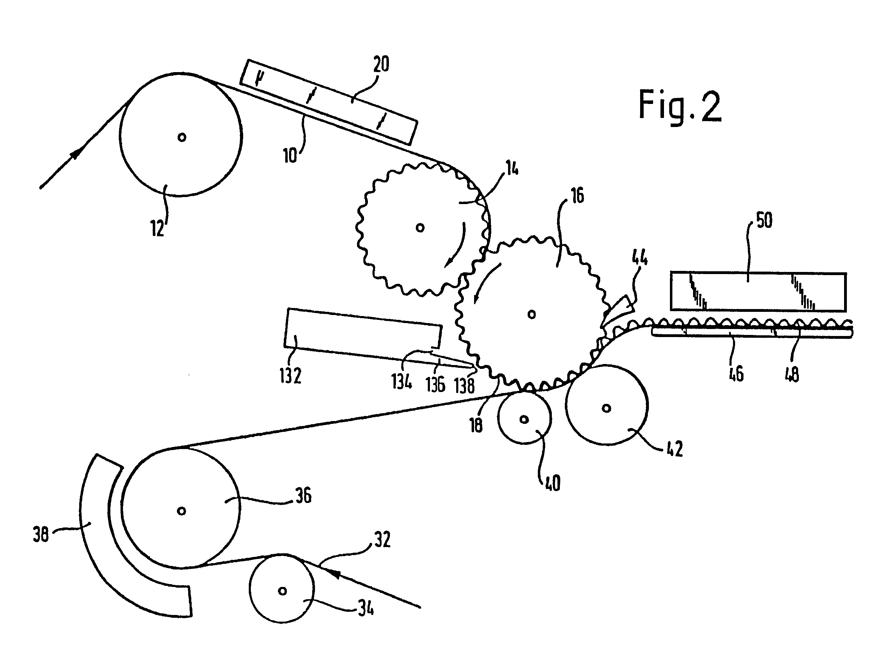

In der Fig. 2 sind die mit der Fig. 1 übereinstimmenden Teile mit denselben Bezugzeichen versehen und werden nicht noch einmal erläutert. Anstelle der Klebstoffauftragvorrichtung 22 gemäß Fig. 1 ist ein nur schematisch angedeuteter Extruder 132 vorgesehen, durch dessen Extruderspalt 134 der Polyamid-Klebstoff extrudiert wird. Der Extruder 132 weist eine Lippe 136 auf, über die der extrudierte Klebstoff fließt. Der Spalt zwischen der Vorderkante 138 der Lippe 136 und den Wellenkämme 18 der Materialbahn 10 ist so bemessen, daß die Wellenkämme jeweils das über die Vorderkante 138 der Lippe 136 fließende Material abstreifen. Der Spalt beträgt etwa 1/10 mm. Die Extrusionsgeschwindigkeit ist relativ zur Geschwindigkeit der vorbeilaufenden gewellten Materialbahn 10 so bemessen, daß pro Wellenkamm nur so viel Material über die Lippe 136 fließt wie benötigt wird, um die gewellte Materialbahn 10 längs eines Wellenkammes 18 zuverlässig mit der planen Materialbahn 32 zu verkleben.

Es ist noch zu betonen, daß der Extruder 132 selbstverständlich auch vertikal angeordnet sein kann, um das Nachfließen des extrudierten Materials über die freie Kante der Lippe 136 zu erleichtern.

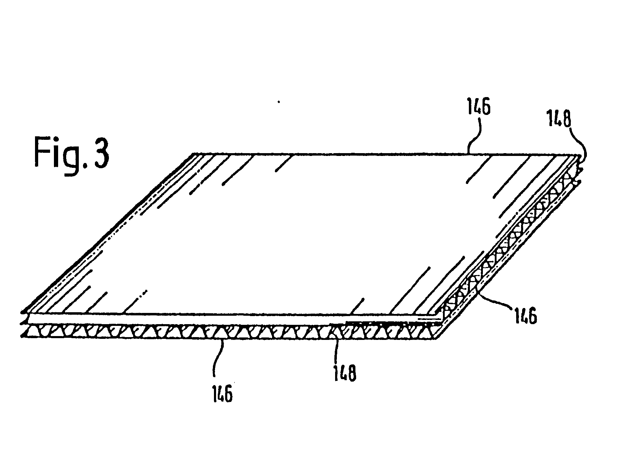

Fig.3 zeigt schließlich in einem perspektivischen Ausschnitt ein für hohe Belastungen geeignetes Verbundmaterial, das aus drei planen Materialbahnen 146 und zwei gewellten Materialbahnen 148 besteht, die zwischen je zwei der Materialbahnen 146 so angeordnet sind, daß ihre Wellenrichtungen senkrecht zueinander stehen. Je nach der geforderten Festigkeit können auch mehr als zwei gewellte Materialbahnen übereinander angeordnet werden, wobei sich die Wellenrichtungen benachbarter gewellter Materialbahnen jeweils kreuzen. Dabei ist es auch möglich, die gewellten Materialbahnen 148 ohne eine dazwischen liegende plane Materialbahn 146 unmittelbar aufeinander zu legen und miteinander zu verbinden.

Das erfindungsgemäße Verbundmaterial weist selbst bei einer Gesamtstärke von nur wenigen Millimetern und geringem Gewicht eine außerordentlich hohe Festigkeit und Belastbarkeit auf.

Für das in der vorstehend beschriebenen Weise hergestellte Material bietet sich eine Fülle von Anwendungsmöglichkeiten. Im Automobilbau ließen sich mit dem erfindungsgemäßen Material wesentliche Einsparungen an Materialeinsatz und Gewicht erzielen, ohne daß dies wie beispielsweise bei der Verwendung von Kunststoff zu Lasten der Festigkeit und/oder Sicherheit geht.

Bei der Herstellung von Leitungen oder Schächten für Lüftungs- und Klimaanlagen wäre es beispielsweise möglich, das aus einer planen Bahn und aus einer gewellten Bahn bestehende Material auf einer Vorratsrolle zur Baustelle zu transportieren und dann an Ort und Stelle von der Vorratsrolle weg zuzuschneiden und die Schächte an der Baustelle herzustellen, während bisher die Schachtabschnitte in einer Werkstatt vorgefertigt werden mußten, da die hierzu verwendeten Bleche jeweils verformt werden mußten, um dem Leitungs- oder Schachtteil die nötige Festigkeit zu geben. Darüber hinaus hat das erfindungsgemäße Material durch die in den Wellenkanälen eingeschlossene Luft eine hohe Wärmeisolierwirkung.

**Patentansprüche**

1. Verfahren zur kontinuierlichen Herstellung eines flächigen Verbundmaterials, das aus mindestens einer stetig gewellten Blechbahn (10) und mindestens einer planen Blechbahn (32) besteht, wobei von einer ersten Vorratsspule eine Blechbahn (10) abgezogen und zwischen zwei ineinandergreifenden Profilwalzen (14, 16) quer zur Bahnlängsrichtung gewellt wird und wobei mindestens eine von einer zweiten Vorratsspule abgezogene plane Blechbahn (32) mit der gewellten Blechbahn (10) kontinuierlich zusammengeführt und durch einen Heißschmelzkleber längs der Wellenkämme der gewellten Blechbahn (10) mit dieser verbunden wird, worauf das Verbundmaterial gekühlt wird dadurch gekennzeichnet, daß die gewellte Blechbahn (10) mittels beheizter Profilwalzen (14, 16) profiliert wird und vor dem und während des Durchlaufs durch die Profilwalzen (14, 16) soweit erwärmt wird, daß der Klebstoff nicht unmittelbar beim Auftrag auf die Blechbahn (10) erhärtet, daß der vorgeschmolzene Klebstoff auf die Wellenkämme (18) der gewellten Blechbahn (10) in Form einer sich entlang der Wellenkämme (18) erstreckenden schmalen Klebstofflinie aufgetragen wird, daß die plane Blechbahn (32) vorgeheizt und gegen die mit Klebstoff versehene gewellte Blechbahn (10) angedrückt wird, daß das aus der gewellten Blechbahn (10) und der planen Blechbahn (32) bestehende Verbundmaterial (48) kontinuierlich über eine ebene Unterlage (46) geführt wird, daß nach dem Auftrag von Klebstoff auf die freien Wellenkämme (18) der gewellten Blechbahn (10) eine zweite vorgeheizte Blechbahn kontinuierlich zugeführt und gegen das Verbundmaterial angepreßt wird und daß das aus den drei Blechbahnen bestehende Verbundmaterial abgekühlt und zerteilt wird.

2. Verfahren nach Anspruch 1, dadurch gekennzeichnet, daß die Blechbahnen (10; 32) durch einen Polyamidklebstoff miteinander ver-bunden werden.

3. Verfahren nach Anspruch 1 oder 2, dadurch gekennzeichnet, daß der Klebstoff nahe der Stelle an der die jeweils miteinander zu ver-bindenden Blechbahnen (10; 32) zusammen-geführt werden extrudiert und von den Wellenkämmen (18) der gewellten Blechbahn (10) von einer entlang der Extruderöffnung verlaufenden Lippe (136) abgestreift wird.

4. Verfahren nach einem der Ansprüche 1 oder 2, dadurch gekennzeichnet, daß der vor-geschmolzene Klebstoff mittels einer Breit-schlitzdüse (30) in Form eines Filmes auf gegenläufig angetriebene beheizte Klebstoffwalzen (24, 26) aufgetragen wird, von denen eine mit der gewellten Blechbahn (10) in Berührung gebracht wird.

5. Verfahren nach Anspruch 4, dadurch gekennzeichnet, daß die Klebstoff abgebende Klebstoffwalze (26) jeweils mit einem an einer der Profilwalzen (14, 16) anliegenden Abschnitt der gewellten Blechbahn (10) in Berührung tritt.

6. Verfahren nach einem der Ansprüche 1 bis 5 dadurch gekennzeichnet, daß die Abkühlung des aus der gewellten und der ersten planen Blechbahn bestehenden Verbundmaterials mittels einer an der freien Oberfläche der planen Blechbahn (32) abrollenden gekühlten Kontaktwalze (42) erfolgt.

7. Verfahren nach einem der Ansprüche 1 bis 5 dadurch gekennzeichnet, daß das Abkühlen des aus drei Blechbahnen bestehenden Verbundmaterials durch Hindurchleiten von Kühlluft durch die Hohlräume in dem Ver-bundmaterial erfolgt.

## Claims

1. A process for continuously making a sheet type composite material consisting of at least one continuously corrugated sheet metal web (10) and at least one flat sheet metal web (32), wherein one sheet metal web (10) is pulled from a first supply roll and is corrugated between two interengaging profiling rolls (14, 16) transversely to the longitudinal web direction and wherein at least one flat sheet metal web (32) pulled from a second supply roll is continuously guided into contact with said corrugated sheet metal web (10) and is combined therewith along the wave crests of said corrugated sheet metal web (10) by means of a hot melt glue, said composite material being then cooled, characterized in that said corrugated sheet metal web (10) is profiled by means of heated profiling rolls (14, 16) and is heated in advance of and during the passage through the profiling rolls, (14, 16) such that the glue does not immediately harden when being applied to said sheet metal web (10), that the premolten glue is applied to the wave crests (18) of said corrugated sheet metal web (10) in the form of a narrow glue line extending along said wave crests (18), that said flat sheet metal web (32) is preheated and pressed against said corrugated sheet metal web (10) with the glue thereon, that the composite material (48) consisting of said corrugated sheet metal web (10) and of said flat sheet metal web (32) is continuously guided over a flat supporting surface (48), that after the application of the glue to the free wave crests (18) of said corrugated sheet metal web (10) a second preheated sheet metal web is continuously supplied and pressed against said composite material, and that the composite material consisting of three sheet metal webs is then cooled off and cut to size.

2. A process as set forth in claim 1 characterized in that said sheet metal webs (10; 32) are combined by means of a polyamide glue.

3. A process as set forth in claim 1 or 2 characterized in that said glue is extruded near the location at which the sheet metal webs (10; 32) to be combined are brought together and is wiped from a lip (136) extending along an extruder opening by the wave crests (18) of said corrugated sheet metal web (10).

4. A process as set forth in claim 1 or 2 characterized in that said premolten glue is applied to oppositely driven heated gluing rolls (24, 26) by means of an elongated slot nozzle (30) in the form of a film, one of said gluing rolls being brought into contact with said corrugated sheet metal web (10).

5. A process as set forth in claim 4 charac-

terized in that the glue applying roll (26) engages a portion of said corrugated sheet metal web (10) which is positioned adjacent one of said profiling rolls (14, 16).

6. A process as set forth in anyone of claims 1 to 5, characterized in that the cooling of said composite material consisting of said corrugated sheet metal web and of said first flat sheet metal web is accomplished by means of a cooled contact roll (42) engaging the free surface of said flat sheet metal web (32).

7. A process as set forth in anyone of claims 1 to 6, characterized in that the cooling of said composite material consisting of three sheet metal webs is achieved by conducting cooling air through the hollow spaces in the composite material.

**Revendications**

1. Procédé de fabrication en continu d'un matériau composite plan comprenant au moins une bande de tôle (10) à ondulation constante et au moins une bande de tôle plane (32), la bande de tôle (10) étant déroulée d'une première bobine d'alimentation et étant ondulée transversalement à son sens longitudinal entre deux cylindres profilés (14, 16) s'engageant l'un dans l'autre, tandis qu'au moins une bande de tôle plane (32) deroulée d'une deuxième bobine d'alimentation est acheminée continuellement avec la bande de tôle ondulée (10) et est assemblée à cette dernière au moyen d'un dispositif de collage en masse fondue chaude le long des ondulations de cette bande ondulée (10) le matériau composite étant ensuite refroidi caractérisé en ce que la bande de tôle ondulée (10) est profilée au moyen de cylindres de profilage chauffés (14, 16) tandis que, avant et pendant son passage à travers les cylindres profilés (14, 16), elle est chauffée de telle sorte que l'adhésif ne durcisse pas directement lors de son application sur cette bande de tôle (10) l'adhésif préalablement fondu est appliqué sur les sommets des ondulations (18) de la bande de tôle ondulée (10) sous forme d'une ligne d'adhesif étroite s'étendant le long de ces sommets d'ondulations (18), la bande de tôle plane (32) étant préalablement chauffée et pressée contre la bande de tôle ondulée (10) pourvue de l'adhésif le matériau composite (48) constitué de la bande de tôle ondulée (10) et de la bande de tôle plane (32) passant en continu sur un support plan (46) puis, après l'application de l'adhésif, sur les sommets d'ondulations libres (18) de la bande de tôle ondulée (10) une deuxième bande de tôle préchauffée est acheminée en continu et est pressée contre le matériau composite, tandis que le matériau composite constitué des trois bandes de tôle est ensuite refroidi et découpé.

2. Procédé selon la revendication 1, caractérisé en ce que les bandes de tôle (10, 32) sont assemblées l'une à l'autre au moyen d'un adhésif de polyamide.

3. Procédé selon la revendication 1 ou 2 caractérisé en ce que, à proximite de l'endroit où sont acheminées les bandes de tôle (10, 32) devant être assemblées l'une à l'autre, l'adhésif est extrudé et est raclé des sommets d'ondulations (18) de la bande de tôle ondulée (10) par une lèvre (136) s'étendant le long de l'ouverture de l'extrudeuse.

4. Procédé selon une des revendications 1 ou 2, caractérisé en ce que au moyen d'une filière à large fente (30), l'adhésif préalablement fondu est appliqué sous forme d'une pellicule sur des cylindres à adhésif (24, 26) chauffés et entraînés dans des directions opposées, l'un d'eux entrant en contact avec la bande de tôle ondulée (10).

5. Procédé selon la revendication 4, caractérisé en ce que le cylindre (26) débitant l'adhésif entre chaque fois en contact avec un tronçon de la bande de tôle ondulée (10) qui vient s'appliquer sur un des cylindres de profilage (14, 16).

6. Procédé selon une des revendications 1 à 5, caractérisé en ce que le refroidissement du matériau composite constitué de la bande de tôle ondulée et de la première bande de tôle plane a lieu au moyen d'un cylindre de contact (42) refroidi roulant sur la surface libre de la bande de tôle plane (32).

7. Procédé selon une des revendications 1 à 6, caractérisé en ce que le refroidissement du matériau composite constitué de trois bandes de tôle a lieu en faisant passer de l'air froid à travers les espaces creux existant dans le matériau composite.

Fig.1

0 069 401

Fig.2

Fig.3